# EUROPEAN PATENT APPLICATION

(11) **EP 4 455 100 A2**
(43) Date of publication of application: **30.10.2024**
(21) Application number: 24199154.6
(22) Date of filing: 04.06.2021
(51) Int. Cl.: C02F 103/08

(54) **LARGE SCALE DESALINATION PROCESS**

(30) Priority: 25.06.2020 GB 202009700; 26.03.2021 GB 202104269
(62) Divisional of application: 21732542.2
(71) Applicant: IDE WATER TECHNOLOGIES LTD., 6092000 Kadima (IL)
(72) Inventor: TAVOR, Alon, 6092000 Kadima (IL); SHTELMAN, Gregory, 6092000 Kadima (IL); LIBERMAN, Boris, 6092000 Kadima (IL)
(74) Representative: Lees, Kate Jane

(57) **Abstract**

A large scale water desalination process for producing at least 100,000 m³/day of product water. Feed water is passed through a high pressure pump driven by at least one steam turbine capable of producing at least 1 MW of energy, the pressurized feed water passing through at least one reverse osmosis membrane to provide a residual brine stream and a product water. A start-up step slowly increases pressure in the membrane at a maximum rate of 12 psi (8.3 Newtons/cm²; 0.08MPa) per second by rotation of the turbine driven high pressure pump at a maximum rate of 30 RPM to slowly increase pressure on the membrane to a predetermined operational pressure and controlling the operational pressure following the start-up step by rotation of the high pressure pump between 500 RPM and 5000 RPM dependent on the pressure applied by the steam turbine.

## Description

### Field of the Invention.

The present invention relates generally to a water treatment process, in particular a large scale desalination treatment process.

### Background

Desalination involves the removal of dissolved salts from seawater and in some cases from the brackish (slightly salty) waters of inland seas, highly mineralized groundwaters (e.g., geothermal brines), and municipal wastewaters. This process makes such waters fit for human consumption, irrigation, industrial applications, and various other purposes.

Various processes exist for desalting such waters but reverse osmosis systems are the most widely used. In reverse osmosis, saltwater is forced against membranes under high pressure, with fresh water passing through the membranes while concentrated mineral salts remain behind. The membranes are packaged into multiple layers in a collection of long tubes. However, this type of technology requires a substantial amount of energy. Larger scale facilities can lower the cost of the desalted water but a significant amount of electricity is still required to drive the pumps to force the salt water through the reverse osmosis membranes.

Generally, a large amount of electricity has to be supplied to the plant to power the desalination process. In some instances, power plants are built adjacent desalination plants to specifically generate and supply electricity to drive the high pressure pumps of the desalination process.

Demand is increasing for ever larger plants producing more water, including mega-size desalination plants, producing at least 100,000 m³/day, ideally more than 600,000 m³/day of potable water. The concept of several, identical reverse osmosis (RO) trains is not suitable for such mega-sized plants. In this respect, each of the RO trains includes a high-pressure pump, energy recovery turbine and membranes. Enlargement of these components leads to contradictions between their optical sizes.

Scale up benefits are unable to be obtained with such oversized RO trains. Instead, it is necessary to switch from local high pressure pumping to each RO train below 1000kW to a "pressure centre" approach using a 6000kW pump or more. All of these mega-sized plants that use this approach, such as the Ashkelon, Hadera and Soreq-1 plants in Israel and Carlsbad in the USA, use electricity as the energy source.

However, electricity as an energy source has a critical limitation which prevents efficient operation of mega-size desalination plants. The limitation is that electricity has only one variable, being its frequency which is applied to control motor and pump rotation. The frequency may be changed between about 30 to 60 Hz, causing a corresponding change in pump rotation between 1500-3600 RPM. This minimal variation is not enough to compensate for the widely changing conditions presented in relation to the operation of the plant, relating to the raw water condition, membrane ageing and the water quantity required.

The condition of the raw feed water varies significantly on a daily basis due to tidal variations. Salinity can change from 1000ppm to 40,000ppm twice a day between high and low tides, causing a change in osmotic pressure of the raw water from about 1 bar to about 30 bar. Temperature changes between winter and summer months from around 1°C to about 35°C bring about an additional variation in pressure of around 10 bars. Membrane aging, such as fouling of the membrane, can also lead to a further pressure variation of about 7 bar and the demand for water can vary by more than 50% between the winter and summer periods. All these variations must be covered by the high pressure pumps. Different sizes and numbers of electrically-driven pumps have been installed to try to address these variations but this is undesirable, requiring additional booster pumps to be installed and then removed depending upon conditions.

Furthermore, the pump efficiency is dependent upon specific pump feed, with a higher pump speed providing a higher efficiency. However, electrically driven pumps are limited to a speed of 3600 RPM which is applied at the maximum frequency of 60Hz.

These electrically driven pumps can also damage the membranes during start-up of the process due to pump rotation being too high. In this respect, the small range of operation of the pump provided using electricity can result in too high a pressure being applied too quickly to the membrane, causing membrane sagging between fibres that extend between the feed and permeate side of the membrane, reducing the life of the membrane. A valve may be installed in the high pressure pump discharge outlet which may open slowly. However, the dissipation of about 1MW energy in about 60 seconds means that the life of the valve is very short. Specialist valves with variable Cv value may be incorporated into the system but these are extremely expensive and may still suffer damage over time.

It is desirable to be able to operate pumps of a large scale desalination plant or process in a more flexible manner, thereby enabling the pumps to adapt to the widely changing conditions presented in relation to operation of the plant.

It is the aim of the present invention to provide an improved desalination process and desalination plant that overcomes, or at least alleviates, the abovementioned problems.

### Summary of the Invention

According to the present invention there is provided a method of desalting feed water, the method comprising passing feed water through a high pressure pump driven by at least one steam turbine capable of producing at least 1 MW of energy, the pressurized feed water passing through at least one reverse osmosis membrane to provide a residual brine stream and a product water, the method further comprising (i) a start-up step wherein the feed pressure is increased at a maximum rate of 12 psi (8.3 Newtons/cm²; 0.08MPa) per second to slowly increase pressure on the membrane to a predetermined operational pressure and (ii) controlling the operational pressure following the start-up step by rotation of the high pressure pump between 500 RPM and 5000 RPM dependent on the pressure applied by the steam turbine.

The slow increase in pressure provided by the turbine driven pump during the start-up step prevents or reduces damage to the membrane. Importantly, the step removes the need to include a valve to reduce pressure applied in the start-up step. However, it is to be appreciated that a valve may be included but due to the slow increase in pump rotation provided by a stream turbine during the start-up step, the valve will be less vulnerable to damage.

More preferably, the feed pressure increase during start up is equal to or less than 10 psi (6.9 Newtons/cm²; 0.07 MPa) per second to achieve a soft start provided directly by a slow rate of rotation of the turbine driven high pressure pump at a maximum rate of 30 RPM, more preferably 25 RPM.

The method is preferably carried out in a large scale water desalination system for producing at least 100,000 m³/day of product water, the system comprising a plurality of feed water inlets, each feed water inlet being connected to at least one high pressure pump to drive feed water through at least one reverse osmosis membrane, the system further comprising at least one residual brine water outlet and at least one product water outlet and wherein the at least one high pressure pump is powered from a non-electrical source which includes at least one steam turbine capable of producing at least 1 MW of energy.

Preferably, the desalination system for carrying out the process of the invention is a mega-size desalination system for producing at least 100,000 m³/day of potable water, more preferably at least 250,000 m³/day of potable water, more preferably still at least 600,000 m³/day of potable water, especially at least 800,000 m³/day of potable water.

The water desalination system preferably has multiple high pressure pumps powered by steam turbines. However, the process may incorporate a mixture of electrical and non-electrical sources, for example the process may switch to an electrical source when supply is cheaper, such as overnight. More preferably, at least 25% of the energy source and more than 10 MW, preferably more than 50 MW is from a natural energy source such as natural gas or LNG gas and preferably, at least 50% of high pressure pumps, more preferably all high pressure pumps, are powered by a non-electrical power source in the form of a steam turbine.

The operating pressure of the high pressure pumps is controlled by altering the steam pressure provided by the at least one steam turbine. In this manner, the at least one steam turbine is used to compensate for the variable conditions of the feed water. The steam turbine operated pump is configured to rotate between 500 RPM to 5000 RPM dependent on the pressure applied by the steam turbine. This provides for a much more flexible and responsive process and system than those powered by electricity which are only able to vary rotation between 1500 to 3600 RPM based on a frequency of 30-60Hz.

The operating pressure may be controlled by one or more controllers to control the pressure applied by the steam turbine to the at least one high pressure pump, for example the output of each steam turbine may be controlled automatically by a given input relating to a condition of the feed water or volume of feed water required.

It is to be appreciated that a mega-size desalination system would have multiple inlets, steam turbines, high pressure pumps and reverse osmosis membranes to provide the required daily output of product water. This size of system enables a steam turbine of at least 1 MW, preferably at least 5MW to be utilised effectively.

Preferably the system for carrying out the process includes a plurality of pressure vessels containing multiple reverse osmosis membranes which are pressurized by multiple steam turbines, each having a capacity of at least 1MW. More preferably, multiple stages of pressure vessels are provided in multiple trains to provide the required output capacity of the plant. Separate or multiple high pressure pumps may be provided but preferably at least one pressure centre is provided having an output of at least 6000 kW per centre.

Preferably, at least two pumps are connected to each steam turbine, preferably being connected to opposing sides of the steam turbine.

The feed water may be treated prior to entering the system in a known matter, for example by ultrafiltration. The product water may also be post-treated.

Preferably, the pressure applied by the steam turbine is adjustable dependent upon one or more variable conditions of the feed water and/or the volume of feed water required.

The process according to the invention optionally includes a flushing step prior to the start-up step to remove any air in the system. During the flushing step, the turbine driven high pressure pump is rotated at a rate of 300-800 RPM, thereby evacuating air from the system with a low pressure of less than 5 Bar (0.5MPa; 50 N/cm²), more preferably, the flushing step is carried out for 30-60 minutes, preferably 45 minutes.

### Brief Description of the Drawings

For a better understanding of the present invention and to show more clearly how it may be carried into effect, reference will now be made by way of example only to the accompanying drawings in which:
Figure 1 is a schematic diagram comparing a mega-size reverse osmosis system driven by steam turbines for carrying out a process according to the present invention and a mega-size reverse osmosis system driven by electricity according to the prior art;
Figure 2 is a schematic diagram illustrating a mega-size reverse osmosis system driven by a steam turbine driven from steam generated in a designated boiler for carrying out the process according to an embodiment of the present invention;
Figure 3 is a schematic diagram illustrating a mega-size reverse osmosis system driven by a steam turbine driven from steam generated in a designated boiler for carrying out the process according to another embodiment of the present invention; and
Figure 4 is a process flow diagram for a mega-size desalination plant driven by steam turbines for carrying out a process according to the present invention; and
Figure 5 is graph of pressure versus time of the feed to the RO membrane.

### Detailed Description

The present invention relates to the replacement of at least 50%, preferably up to 100% of the electrical power source that is conventionally used to drive high pressure pumps for feeding raw water through reverse osmosis membranes of a mega-size desalination plant with steam turbines to provide a process for desalination that is able to provide extreme variations in pressure to the membrane, from medium pressures during a flushing step, to low pressures during a start-up step to variable high pressures required during an operational step but being dependent upon conditions of the feed water supplied and/or the volume of product water required.

In the context of this disclosure, a "mega-size" desalination plant is a plant that produces at least 100,000 m³/day, ideally more than 600,000 m³/day of potable water. Such a mega-size plant requires a substantial amount of power to operate the high pressure pumps. Normally, this power is provided by electricity supplied via electrical cables to the pumps. However, such a power source has only limited variability, relying on a change of frequency between 30-60 Hz to alter the rotation of the high pressure pump between 1500 and 3600 RPM. Furthermore, mega-size plants often employ a pressure centre wherein each pump is required to operate at 6000 kW or more rather than the smaller pumps used for local high pressure pumping that operate at below 1000 kW.

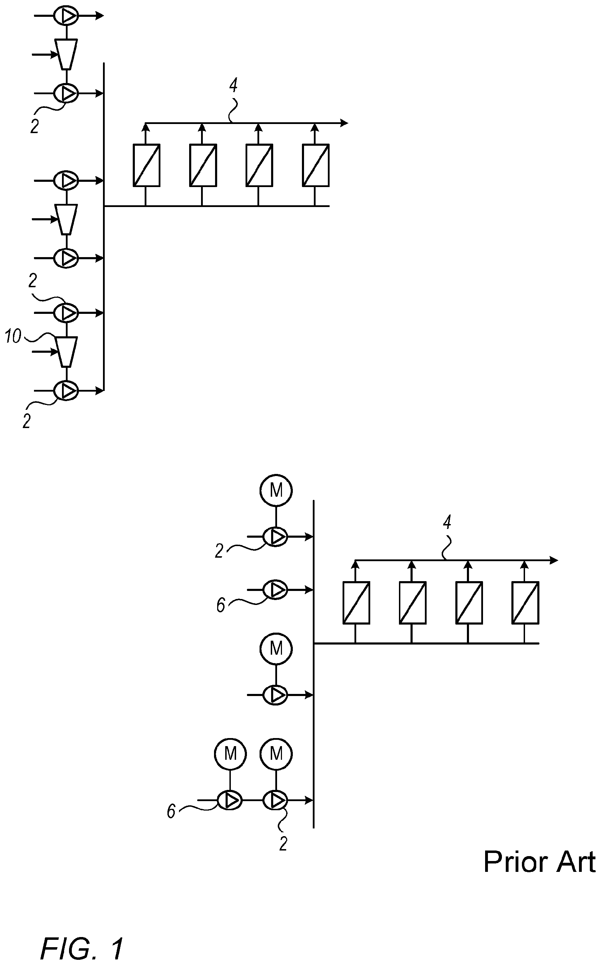

Figure 1 of the accompanying drawings compares the prior art operation of a mega-size plant (below diagonal line) with that used to provide a process according to the present invention (above diagonal line). Electricity powers the individual pumps 2 which drive high pressure water through the reverse osmosis trains 4. Conditions vary tremendously in relation to the operation of the plant, relating to the raw water condition, membrane ageing and the water quantity required as this is to some extent addressed by varying the frequency of power to the pumps or my adding or removing booster pumps 6 to the system. However, the change of frequency provides for only a limited variation and adding or removing pumps from operation decreases the efficiency of the operation of the plant. As a result, electrical powering of the pumps does not compensate for the widely varying conditions brought about by daily tidal variations, seasonal temperature changes, membrane aging and variation in demand for water. The system and process of the present invention replaces electrical power with steam turbines 10 to power one or multiple high pressure pumps 2 for driving high pressure water through the RO trains.

This steam control is applicable only to mega size RO systems where a single motor is greater 1 MW, preferably greater than 5 MW as otherwise the reduction in efficiency would outweigh the benefits provided by the flexibility of the steam turbines. The incorporation of steam turbines into such installations requires sophisticated infrastructure and very precise alignment with desalination water pumps driven by the steam turbines. The provision of steam turbines in a mega-size plants enables operation of the plant to compensate effectively for the change in conditions due to the ability to control steam pressure and flow. Steam turbine operated pumps can be varied in speed from 500 RPM to 5000 RPM compensating for the significant fluctuations in pressure and flow. This enables to the plant to operate more efficiently and removes the need to add and remove pumps to the system depending upon the prevailing conditions. Furthermore, it is possible to achieve larger steam turbine capacity by connecting the pumps to both sides of each steam turbine, as illustrated in the diagram of Figure 1.

The steam turbine operated pumps may be operated at 500 RPM if required. The lower operation speed may be required in response to lower pressure and flow requirements. For example, one or more conditions such as low salinity, low water temperature, a clean membrane and low demand for water can combine to produce a lower required operating speed.

Conversely, the steam turbine operated pumps may be operated at 5000 RPM if required. The higher operation speed may be required in response to higher pressure and flow requirements. For example, one or more conditions such as high salinity, high water temperature, a fouled membrane and high demand for water can combine to produce a higher required operating speed.

Environmental benefits are also obtained by the replacement of electrical power with energy from steam turbines. The higher RPM obtainable with steam turbines increases the efficiency of the pump and less power is required for the same work, reducing the levels of carbon dioxide discharged into the atmosphere. The steam turbine also allows direct conversion between gas and torque, avoiding conversion to electricity with related energy losses. Furthermore, gas combustion and conversion to steam on the desalination site enables conversion of about 50 g of carbon dioxide into bicarbonate for each cubic metre of produced water. Thus, for a mega-size desalination plant producing 800,000 m³/day, it is 40,000 kg per day of carbon dioxide converted into bicarbonate in the drinking water produced.

The high pressure pumps that are driven by steam turbines enable the process to provide a start-up mode where a slow increase in pressure is applied to the membrane, preventing damage to the membrane and removing the need for a pressure release valve. In small systems, a pressure release valve is able to cope with the pressures applied but in a large system, in particular a mega-size plant, the valve is unable to dissipate the large amount of energy quickly enough and the life of the valve will be very short. In the present process, the turbine driven high pressure pump enables an increase in pressure of less than 12 psi (8.3 Newtons/cm²; 0.08MPa) per second, preferably less than 10 psi (6.9 Newtons/cm²; 0.07 MPa) per second, especially 5 psi (3.45 Newtons/cm²; 0.03 MPa) per second. This slow increase in pressure prolongs the life of the membrane by around 5 years as otherwise the membrane would be subject to sagging between fibres of the feed and permeate sides of the membrane. Furthermore, it removes the need for a pressure release valve or, if a valve is provided, extends the life of the valve.

For example, for a desalination process, the working pressure may be 75 bar (about 1155 psi or 7.96 MPa). The start-up step must increase the feed pressure from 0 psi to 1150 psi within 116 second. In the prior art processes, the pump is operated by an electrical motor and equipped with Variable Frequency Drive (VFD). The pump is not able to increase rotation from 0 RPM to 3000 RPM in linear slope of 25 RPM in each second. In contrast, the start-up step of the process of the invention uses a turbine driven pump that can provide such a linear slope of 25 RPM per second. The steam turbine driven pump may capable of starting at 0 RPM and increasing speed linearly by 25 RPM per second. The steam turbine driven pump may increase speed linearly in this way from 0 RPM to 1150 RPM. In some examples, the steam turbine driven pump may increase speed linearly in this way from 0 RPM to 3000 RPM.

With an electrical motor driven pump, the motor must initially start from 0 RPM to minimum 900RPM within 1-2 seconds. This means that in 2 second the pressure will rise to 347 psi (2.4 MPa), i.e. 173 psi (1.2 MPa) per second. After motor reaches 900 RPM, the increase to 3000 rpm VFD can be made slowly but the problem is in the initial 0-900RPM, which an electrical motor cannot achieve slowly. A valve may be provided between pump and membrane to diminish the pressure slope. However, this is only satisfactory for small pumps. A large pump 1000-6000kW, such as that utilized in mega-sized plants, a valve approach does not work well, because the valve should dissipate 300 to 1600kW on its shaft. A valve cannot do this for a reasonably long time without damage. In contrast, a steam turbine used in the process of the present invention can open steam valve slowly from beginning and slowly increase the pump rotation.

For the flushing mode prior to start-up, air and foam cannot be evacuated from membrane by any other way than flushing out air with low pressure 1-4 bar (0.1 - 0.4 MPa) for around 45 minutes. In the process of the present invention this too can be achieved by varying the rotation of the HPP pump driven by the steam turbine, to provide a rotation of between 300 to 800 RPM. Again, this is not possible with a pump driven by an electrical motor.

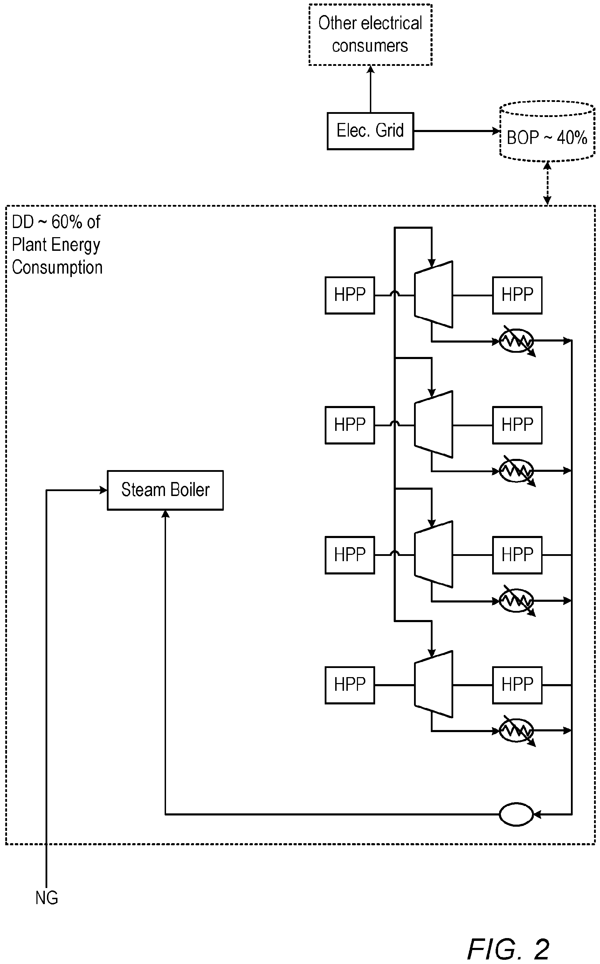

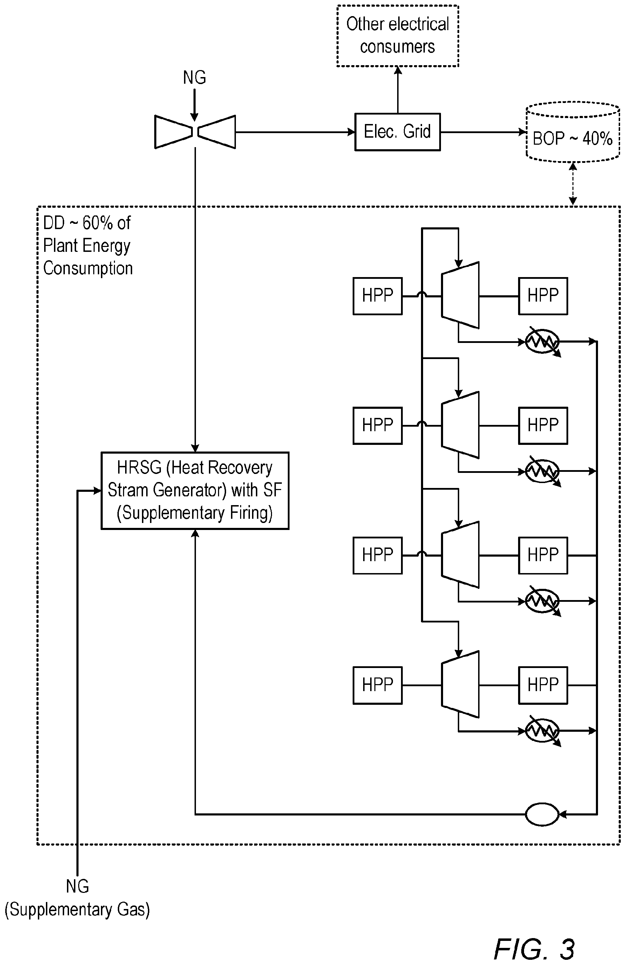

Figures 2 and 3 of the accompanying drawings illustrate examples for the production of steam for supplying the multiple steam turbines of a mega-size RO system according to the invention. Figure 2 has steam generated in a designated steam boiler and Figure 3 uses a heat recovery steam generator. However, it is to be appreciated that the invention is not limited to a particular source of steam for the turbines.

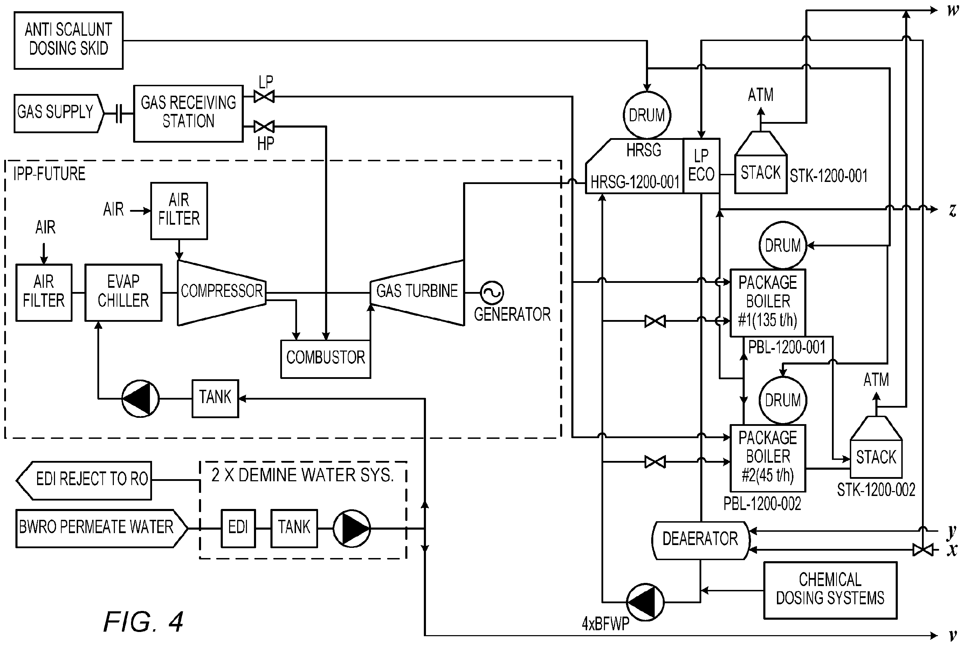

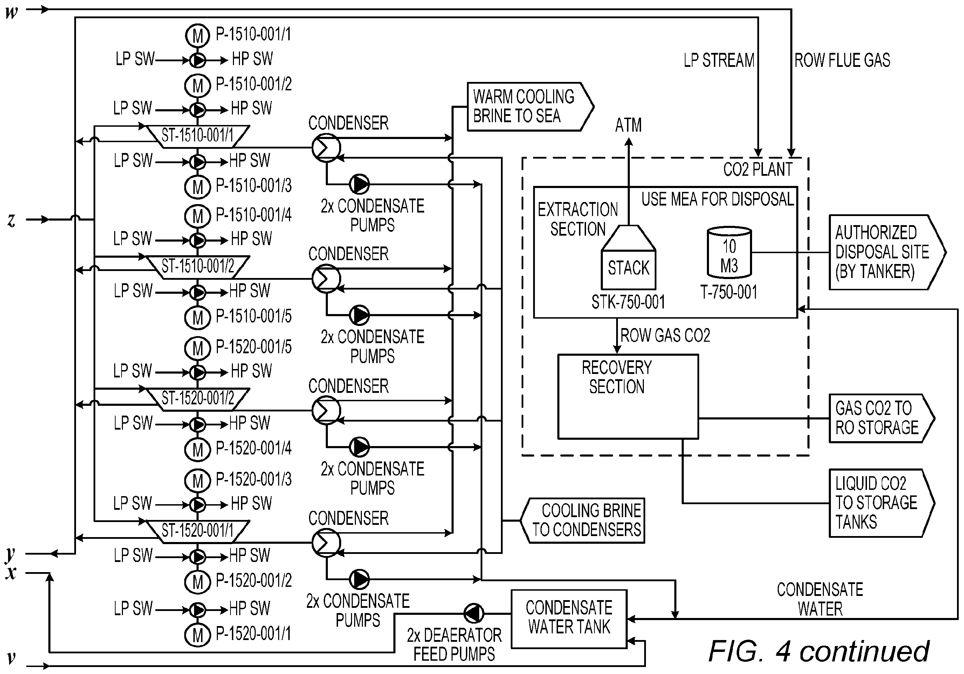

Figure 4 illustrates a flow diagram of one embodiment of a reverse osmosis desalination plant provided with steam turbines according to the present invention. Gas turbine (GT) generating electricity at full capacity for the self-consumption of the desalination plant. Excessive electrical power is directed to the national electrical grid. Hot exhaust of the GT is directed to HRSG (heat recovery steam generator) to generate steam. The steam generated at the HRSG is then used to drive steam turbine coupled to the high pressure pumps (HPP) through gear box used to feed the SWRO membranes with high pressure seawater. These pumps are responsible for up to about 50% of the desalination plant power demand.

The HRSG generate steam relative to the GT exhaust rate. For meeting the water demand with the steam turbine driven HPP gas fired boilers (package boilers) are installed. The steam generated at the package boilers is discharged at common header. The amount of steam generated at the package boilers is controlled by the water flow demand.

The desalination plant consumes a relatively large amount of CO2 in the post treatment process. The exhaust of the boilers is partly directed to a CO2 extraction plant. In the CO2 extraction plant CO2 from the boilers exhaust is extracted and liquified to supply the needs of the desalination plant.

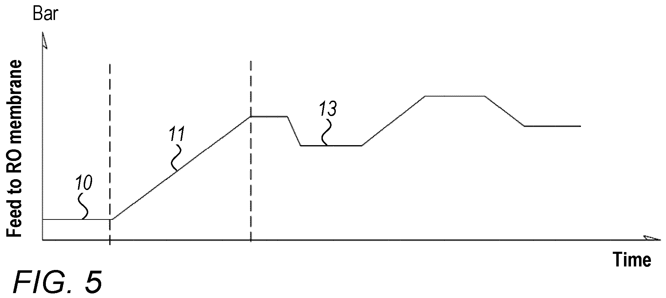

Figure 5 of the accompanying drawings illustrates the pressure build-up during flushing, start-up and normal operation of the desalination plant. Air is evacuated from the system at 10 with a slow rotation pressure of 3-5 bar, and then there is a slow pressure increase at 11 from 5 bar to 70 bar to slowly ramp up by 10 psi per second. A consistently higher pressure is then used at 13 for normal operation, with some variations in pressure dependent upon feed temperature, equipment status and client request for product quality. This huge variations in pressure are all achieved by the high pressure pumps driven by turbines.

It is to be appreciated that modifications to the aforementioned plant and process may be made without departing from the principles embodied in the examples described and illustrated herein.

The invention may be further described by reference to the following numbered paragraphs:
1. A method of desalting feed water, the method comprising passing feed water through a high pressure pump driven by at least one steam turbine capable of producing at least 1 MW of energy, the pressurized feed water passing through at least one reverse osmosis membrane to provide a residual brine stream and a product water, the method further comprising a start-up step wherein the feed pressure is increased at a maximum rate of 12 psi ( 8.3 Newtons/cm²; 0.8MPa) per second by rotation of the turbine driven high pressure pump to slowly increase pressure on the membrane to a predetermined operational pressure and controlling the operational pressure following the start-up step by rotation of the high pressure pump between 500 RPM and 5000 RPM dependent on the pressure applied by the steam turbine.
2. The method of paragraph 1 wherein the feed pressure increase during start up is equal to or less than 10 psi ((6.9 Newtons/cm²; 0.07 MPa) per second to achieve a soft start provided directly by a slow rate increase of rotation of the turbine driven high pressure pump, preferably at a maximum rate of 30RPM during start-up.
3. The method of paragraph 1 or 2 wherein the method produces at least 100,000 m³/day of product water.
4. The method of paragraph 3 wherein the method produces least 250,000 m³/day of product water.
5. The method of any one of paragraphs 1 to 4, wherein the feed water is driven through multiple reverse osmosis membranes by multiple high pressure pumps powered by steam turbines.
6. The method of any one of paragraphs 1 to 5wherein the operating pressure of each high pressure pump is controlled by altering the steam pressure provided by the at least one steam turbine.
7. The method of paragraph 6, wherein one or more controllers are provided to control the pressure applied by each steam turbine to the at least one high pressure pump.
8. The method of paragraph 6 wherein the output of each steam turbine is controlled automatically by a given input relating to a condition of the feed water or volume of feed water required.
9. The method of any one of paragraphs 1 to 8, wherein each steam turbine provides at least 5MW of energy.
10. The method of any one of paragraphs 1 to 9 further comprising a flushing step prior to the start-up step, the flushing step comprising rotating the turbine driven high pressure pump at a rate of 300-800 RPM to provide an air evacuation pressure of less than 5 Bar (0.5MPa; 50 N/cm²).
11. The method of paragraph 10 wherein the flushing step is carried out for 30-60 minutes.

## Claims

1. A method of desalting feed water, the method comprising passing feed water through a high pressure pump driven by at least one non-electrical source capable of producing at least 1 MW of energy, the pressurized feed water passing through at least one reverse osmosis membrane to provide a residual brine stream and a product water, the method further comprising a step of controlling at least one selected from the group consisting of (i) the operating pressure of said at least one high pressure pump; (ii) the rotation speed of said at least one high pressure pump or any combination thereof according to at least one of (a) variable conditions of the feed water; (b) equipment status and (c) volume of feed water required.

2. The method according to claim 1, wherein at least one of the following holds true (a) said method further comprises a start-up step wherein the feed pressure is increased at a maximum rate of 12 psi ( 8.3 Newtons/cm²; 0.8MPa) per second by rotation of the driven high pressure pump to slowly increase pressure on the membrane to a predetermined operational pressure and controlling the operational pressure following the start-up step by rotation of the high pressure pump between 500 RPM and 5000 RPM dependent on the pressure applied by the non-electrical source; (b) the feed pressure increase during start up is equal to or less than 10 psi ((6.9 Newtons/cm²; 0.07 MPa) per second to achieve a soft start provided directly by a slow rate increase of rotation of the high pressure pump; (c) the slow rate of rotation of the high pressure pump is at a maximum rate of 30RPM during start-up; (d) the method further comprising a flushing step prior to the start-up step, the flushing step comprising rotating the high pressure pump at a rate of 300-800 RPM to provide an air evacuation pressure of less than 5 Bar (0.5MPa; 50 N/cm²); (e) any combination thereof.

3. The method according to any one of the preceding claims, wherein the variable conditions of the feed water, equipment status and volume of feed water required include at least one of salinity of the feed water, temperature of the feed water, extent of fouling of the membrane, demand for product water, product water quantity required, quality of product water and any combination thereof.

4. The method according to any one of the preceding claims, wherein the feed water is driven through multiple reverse osmosis membranes by multiple high pressure pumps.

5. The method according to any one of the preceding claims, wherein one or more controllers are provided to control the pressure applied to the at least one high pressure pump.

6. The method according to any one of the preceding claims wherein the output of said non-electrical source is controlled by a given input relating to a condition of the feed water or volume of feed water required.

7. The method according to any one of the preceding claims, wherein the at least one non electrical source is selected from a group consisting of gas turbine, steam turbine and any combination thereof.

8. The method according to claim 7, wherein the operating pressure of each high pressure pump is controlled by altering the steam pressure provided by the at least one steam turbine.

9. The method according to any one of the preceding claims, wherein said method is adapted to produce at least 100,000 m3 /day of product water.

10. The method according to any one of the preceding claims, wherein at least one of said high pressure pump is configured to rotate in a range of about 500 RPM to about 5000 RPM controllable by said at least one non electrical source.

11. The method according to any one of the preceding claims, additionally comprising at least one step selected from a group consisting of (a) providing at least one electrical source is in communication with said at least one high pressure pump (b) the method is switchable between an electrical and non-electrical source; and any combination thereof.

12. A large scale water desalination plant, comprising:
at least one feed water inlet being connected to at least one high pressure pump to drive feed water through at least one reverse osmosis membrane; said at least one high pressure pump powered by at least one nonelectrical source;
wherein at least one selected from a group consisting of the operating pressure of said at least one high pressure pump, the rotation speed of said at least one high pressure pump and any combination thereof is controllable according to at least one of (a) variable conditions of the feed water; (b) equipment status and (c) volume of feed water required or any combination thereof.

13. The desalination plant according to claim 12, wherein said at least one nonelectrical source is selected from a group consisting of at least one steam turbine, at least one gas turbine and any combination thereof.

14. The desalination plant according to claim 12, wherein at least one selected from a group consisting of the operating pressure of said at least one high pressure pump, the rotation speed of said at least one high pressure pump and any combination thereof is controllable by altering at least one selected from a group consisting of the steam pressure, steam flow, water flow or any combination thereof.

15. The desalination plant according to claim 12, wherein the at least one parameter selected from a group consisting of steam pressure, steam flow, water flow, the operating pressure of said at least one high pressure pump, the rotation speed of said at least one high pressure pump or any combination thereof is automatically controlled.

16. The desalination plant according to claim 12 wherein said at least one nonelectrical source is capable of producing at least 1 MW of energy.

17. The desalination plant according to claim 12, wherein the variable conditions of the feed water, equipment status and volume of feed water required include at least one of salinity of the feed water, temperature of the feed water, extent of fouling of the membrane, demand for product water, product water quantity required, quality of product water and any combination thereof.

18. The desalination plant according to any one of claims 12 to 17, wherein said large scale water desalination plant is adapted to produce at least 100,000 m3 /day of product water.

19. The desalination plant according to any one of claims 12 to 18, wherein at least one of said high pressure pump is configured to rotate in a range of about 500 RPM to about 5000 RPM controllable by said at least one nonelectrical source.

20. The desalination plant according to claim 12, additionally comprising one or more controllers, adapted to regulate at least one selected from a group consisting of steam pressure, steam flow and any combination thereof; the operating pressure of said at least one high pressure pump, the rotation speed of said at least one high pressure pump, water flow and any combination thereof.
